(19)

**Europäisches Patentamt**
**European Patent Office**
**Office européen des brevets**

(11) **EP 4 096 165 A1**

(12) **EUROPEAN PATENT APPLICATION**
published in accordance with Art. 153(4) EPC

(43) Date of publication:
**30.11.2022 Bulletin 2022/48**

(21) Application number: **20921147.3**

(22) Date of filing: **27.09.2020**

(51) International Patent Classification (IPC):
*H04L 12/26* (2006.01)     *H04L 12/801* (2013.01)

(52) Cooperative Patent Classification (CPC):
**H04L 43/00; H04L 47/10**

(86) International application number:
**PCT/CN2020/118156**

(87) International publication number:
**WO 2021/169279 (02.09.2021 Gazette 2021/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.02.2020  CN 202010127992**

(71) Applicant: **Huawei Technologies Co., Ltd.
Shenzhen, Guangdong 518129 (CN)**

(72) Inventors:
• **XIN, Fang
Shenzhen, Guangdong 518129 (CN)**
• **LI, Weidong
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MESSAGE DISORDER DETECTION METHOD, APPARATUS AND SYSTEM**

(57)     This application provides a packet out-of-order detection method and apparatus, and a system, and belongs to the field of communication technologies. In the solution provided in this application, a first service packet of a target service flow received by a packet receiving node includes in-situ flow detection information, and the in-situ flow detection information includes a detection flag and a sequence number of the first service packet. When determining, based on the detection flag, that out-of-order detection needs to be performed, the packet receiving node may perform the out-of-order detection based on the sequence number of the first service packet and a sequence number of a second service packet. The packet receiving node may directly perform the out-of-order detection on service packets of the target service flow, a detection result may reflect an actual out-of-order status of the service packets of the target service flow, and a detection packet does not need to be constructed in a detection process. Therefore, efficiency and accuracy of out-of-order detection are effectively improved.

FIG. 4A

**(Cont. next page)**

CONT.
FROM
FIG. 4A

CONT.
FROM
FIG. 4A

CONT.
FROM
FIG. 4A

108: Detect, based on a sequence number of the first service packet and a sequence number of the second service packet, whether the first service packet is out of order

109: Report a quantity of out-of-order service packets in service packets of the target service flow that are received within a detection period

110: Display a quantity of out-of-order service packets of the target service flow within each detection period

FIG. 4B

**Description**

This application claims priority to Chinese Patent Application No. 202010127992.X, filed with the China National Intellectual Property Administration on February 28, 2020 and entitled "PACKET OUT-OF-ORDER DETECTION METHOD AND APPARATUS, AND SYSTEM", which is incorporated herein by reference in its entirety.

**TECHNICAL FIELD**

This application relates to the field of communication technologies, and in particular, to a packet out-of-order detection method and apparatus, and a system.

**BACKGROUND**

Packet out-of-order detection means that consistency between an order of packets received by a packet receiving node and an order of packets sent by a packet sending node is detected. If a packet out-of-order detection result is that the order of packets received by the packet receiving node is inconsistent with the order of packets sent by the packet sending node, it may be determined that the packets received by the packet receiving node are out of order. Based on the packet out-of-order detection result, a fault of a data communication system can be detected in a timely manner and rectified, thereby ensuring system reliability.

In a related technology, out-of-order detection may be performed by constructing a detection packet. Specifically, the packet sending node may successively send detection packets to the packet receiving node, and sequence numbers of the detection packets sent by the packet sending node increase successively. After receiving the detection packets, the packet receiving node may detect whether sequence numbers of received detection packets increase successively. If the sequence numbers of the received packets do not increase successively, the packet receiving node may determine that the detection packets are out of order.

In a solution in the related technology, detection packets need to be constructed to perform out-of-order detection, and a detection result of the detection packets cannot accurately reflect an out-of-order status of actual service packets. Therefore, detection efficiency and accuracy are low.

**SUMMARY**

This application provides a packet out-of-order detection method and apparatus, and a system, to resolve a technical problem of low efficiency and accuracy of an out-of-order detection solution in a related technology.

According to a first aspect, a packet out-of-order detection method is provided. In the method, a first service packet of a target service flow received by a packet receiving node includes in-situ flow detection information, and the in-situ flow detection information includes a detection flag and a sequence number of the first service packet. The detection flag is used to indicate that a packet detection type is out-of-order detection. When determining, based on the detection flag, that the out-of-order detection needs to be performed on the first service packet, the packet receiving node may detect, based on the sequence number of the first service packet and a sequence number of a previous service packet that belongs to the target service flow, that is, a second service packet, whether the first service packet is out of order.

Based on the method provided in this application, a packet includes the in-situ flow detection information, so that the packet receiving node may directly perform the out-of-order detection on service packets of the target service flow. A detection result may accurately reflect an actual out-of-order status of the service packets of the target service flow, and a detection packet does not need to be constructed in a detection process. Therefore, accuracy and efficiency of out-of-order detection are effectively improved.

Optionally, the in-situ flow detection information may be in-situ flow information telemetry (in-situ flow information telemetry, IFIT) information. The IFIT information includes a header type indicator (header type indicator, HTI) field and a flow instruction extension header (flow instruction extension header, FIEH) field. The HTI field may carry the detection flag, and the FIEH field may carry the sequence number.

Alternatively, the FIEH field may carry the detection flag and the sequence number.

For example, the detection flag may be carried in a reserved field in the HTI field or the FIEH field. The sequence number may be carried in a reserved field in the FIEH field, or several bytes may be added to a length of the FIEH field, and the sequence number may be carried in the added bytes.

Optionally, the IFIT information is carried between a multiprotocol label switching (multiprotocol label switching, MPLS) label of a packet and a packet payload (payload).

Optionally, the IFIT information is carried between a virtual routing and forwarding (virtual routing and forwarding, VRF) label of a packet and a packet payload.

Optionally, the detection flag may be further used to indicate an out-of-order detection manner, or the in-situ flow detection information may further include an indication flag used to indicate an out-of-order detection manner. The out-of-order detection manner includes end-to-end detection or hop-by-hop detection. Correspondingly, when determining, based on the detection flag, that the packet detection type is out-of-order detection, the packet receiving node may further determine the out-of-order detection manner. If the out-of-order detection manner is the hop-by-hop detection, the packet receiving node may determine that the out-of-order detection needs to be performed on the first service packet. If the out-of-order detection manner is the end-to-end detection, the packet receiving node first needs to detect whether the packet receiving node is an egress node of the target service flow in a network. If the packet receiving node is the egress node of the target service flow in the network, the packet receiving node may determine that the out-of-order detection needs to be performed on the first service packet.

In the solution provided in this application, the out-of-order detection can be implemented in different manners based on configuration of the detection flag or the indication flag, to effectively improve flexibility of the out-of-order detection.

Optionally, sequence numbers of service packets that are of the target service flow and that are sent by a packet sending node may increase successively in a service packet sending sequence. Correspondingly, a process in which the packet receiving node detects, based on the sequence number of the first service packet and the sequence number of the second service packet, whether the first service packet is out of order may include:

if the sequence number of the first service packet is greater than the sequence number of the second service packet, determining that the first service packet is not out of order; or if the sequence number of the first service packet is less than the sequence number of the second service packet, determining that the first service packet is out of order.

Optionally, the in-situ flow detection information may further include a detection period. After detecting whether the first service packet is out of order, the packet receiving node may further report, to a controller, a quantity of out-of-order service packets in the service packets that are of the target service flow and that are received within the detection period; or the packet receiving node may directly display a quantity of out-of-order service packets in the service packets that are of the target service flow and that are received within the detection period.

After the packet receiving node reports, to the controller, a quantity of out-of-order service packets that is collected in each detection period, the controller may display the quantity of received out-of-order service packets, so that operation and maintenance personnel can accurately locate, based on an out-of-order detection result displayed by the controller, a node or a link that causes packet out-of-order in a data communication system, to maintain a fault source in the system in a timely manner.

According to a second aspect, a packet out-of-order detection method is provided. The method may be applied to a packet sending node, and the method may include:

The packet sending node generates a second service packet of a target service flow, and sends the second service packet to a packet receiving node. The packet sending node generates a first service packet of the target service flow, and sends the first service packet to the packet receiving node. The first service packet includes in-situ flow detection information, and the in-situ flow detection information may include a detection flag and a sequence number of the first service packet. The in-situ flow detection information may indicate the packet receiving node to detect, based on the sequence number of the first service packet and a sequence number of the second service packet when the packet receiving node determines, based on the detection flag, that out-of-order detection needs to be performed on the first service packet, whether the first service packet is out of order.

Optionally, a process in which the packet sending node generates the first service packet of the target service flow may include:

adding the in-situ flow detection information to service data of the target service flow, to obtain the first service packet of the target service flow, where the in-situ flow detection information is in-situ flow information telemetry IFIT information, and the IFIT information includes a header type indicator HTI field and a flow instruction extension header FIEH field, the HTI field carries the detection flag, and the FIEH field carries the sequence number of the first service packet, or the FIEH field carries the detection flag and the sequence number of the first service packet.

According to a third aspect, a packet out-of-order detection apparatus is provided. The apparatus is applied to a packet receiving node. The apparatus may include at least one module, and the at least one module may be configured to implement the packet out-of-order detection method that is provided in the foregoing aspects and that is applied to the packet receiving node.

According to a fourth aspect, a packet out-of-order detection apparatus is provided. The apparatus is applied to a packet sending node. The apparatus may include at least one module, and the at least one module may be configured to implement the packet out-of-order detection method that is provided in the foregoing aspects and that is applied to the packet sending node.

According to a fifth aspect, a packet out-of-order detection apparatus is provided. The apparatus may include a memory, a processor, and a computer program that is stored in the memory and that is executable on the processor. When executing the computer program, the processor implements the packet out-of-order detection method provided in any one of the foregoing aspects.

According to a sixth aspect, a computer-readable storage medium is provided. The computer-readable storage medium stores instructions, and the instructions are executed by a processor to implement the packet out-of-order detection method provided in any one of the foregoing aspects.

According to a seventh aspect, a computer program product that includes instructions is provided. When the computer program product runs on a computer, the computer is enabled to perform the packet out-of-order detection method provided in any one of the foregoing aspects.

According to an eighth aspect, a data communication system is provided. The system may include a packet receiving node and a packet sending node. The packet receiving node may include a packet out-of-order detection apparatus that is provided in the foregoing aspects and that is applied to the packet receiving node. The packet sending node may include a packet out-of-order detection apparatus that is provided in the foregoing aspects and that is applied to the packet sending node.

In conclusion, this application provides the packet out-of-order detection method and apparatus, and the system. The first service packet received by the packet receiving node includes the in-situ flow detection information, and the in-situ flow detection information includes the detection flag and the sequence number of the first service packet. When determining, based on the detection flag, that the out-of-order detection needs to be performed on the first service packet, the packet receiving node may perform the out-of-order detection based on the sequence number of the first service packet and the sequence number of the previous service packet, that is, the second service packet. According to the solution provided in this application, the out-of-order detection may be directly performed on the first service packet of the target service flow. Therefore, the detection result can accurately reflect the actual out-of-order status of the service packets of the target service flow, and the detection packet does not need to be constructed in the detection process. As a result, efficiency and accuracy of the out-of-order detection are effectively improved, and operation and maintenance costs of the data communication system can be effectively reduced.

In addition, because no detection packet needs to be constructed in the out-of-order detection process, the detection packet can be prevented from occupying link bandwidth and wasting bandwidth resources, to reduce a risk of a packet loss due to link congestion.

**BRIEF DESCRIPTION OF DRAWINGS**

FIG. 1 is a schematic diagram of a structure of a data communication system according to an embodiment of this application;
FIG. 2 is a schematic diagram of an IFIT information encapsulation location according to an embodiment of this application;
FIG. 3 is a schematic diagram of an IFIT information encapsulation format according to an embodiment of this application;
FIG. 4A and FIG. 4B are a flowchart of a packet out-of-order detection method according to an embodiment of this application;
FIG. 5 is a schematic diagram of a structure of another data communication system according to an embodiment of this application;
FIG. 6 is a schematic diagram of another IFIT information encapsulation format according to an embodiment of this application;
FIG. 7 is a schematic diagram of still another IFIT information encapsulation format according to an embodiment of this application;
FIG. 8 is a schematic diagram of a structure of a packet out-of-order detection apparatus according to an embodiment of this application;
FIG. 9 is a schematic diagram of a structure of another packet out-of-order detection apparatus according to an embodiment of this application; and
FIG. 10 is a schematic diagram of a structure of still another packet out-of-order detection apparatus according to an embodiment of this application.

**DESCRIPTION OF EMBODIMENTS**

With reference to the accompanying drawings, the following describes in detail a packet out-of-order detection method and apparatus, and a system provided in embodiments of this application.

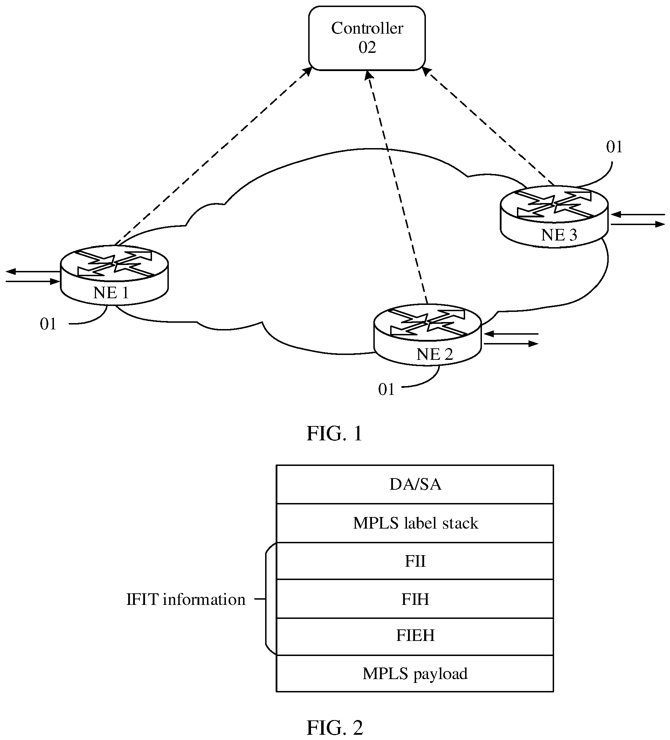

FIG. 1 is a schematic diagram of a structure of a data communication system according to an embodiment of this application. As shown in FIG. 1, the data communication system includes a plurality of nodes 01 and a controller 02. Communication connections may be established between the plurality of nodes 01 and between each node 01 and the controller 02 through a wired or wireless network. Each node 01 may be a network device that has a data forwarding function, such as a router or a switch. The controller 02 may be a server, a server cluster including several servers, or a cloud computing service center. For example, the controller 02 may be a network control engine (network control engine, NCE). Each node 01 in the plurality of nodes 01 may send a service packet of a service flow to another node 01, and each node 01 may further report detection information related to the service packet to the controller 02. As a centralized computing unit of the data communication system, the controller 02 may measure, based on the received detection information, a service-level agreement (service-level agreement, SLA) performance indicator such as a quantity of lost packets, a delay, or an out-of-order status of the service packet, to monitor running performance of the data communication system.

Optionally, in this embodiment of this application, the data communication system may be an internet protocol (internet protocol, IP)-based radio access network (radio access network, RAN). The IP RAN may monitor a network running status by using an IFIT technology. The IFIT technology is an in-situ flow detection technology in which feature marking (that is, coloring) is performed on a service packet in an actual service flow and a packet loss and a delay of the marked service packet (that is, the colored packet) are measured.

For a given network, a to-be-detected target service flow (which may be identified by an IP 5-tuple) has one or more ingress nodes (ingress nodes) and one or more egress nodes (egress nodes) in the network. Each ingress node may send the target service flow to an egress node, or may send the target service flow to an egress node through one or more transit nodes (transit nodes). When the IFIT technology is used for packet loss detection, each ingress node may color service packets of the target service flow based on a specific detection period, collect statistics on a quantity of colored packets within each detection period, and report the quantity to the controller 02. Each egress node may collect, based on a same detection period as that of the ingress node, statistics on a quantity of colored packets that are of the target service flow and that are received within each detection period, and report the quantity to the controller 02. The controller 02 may further obtain a quantity of lost packets within each detection period through calculation based on the quantity of colored packets reported by the ingress node and the quantity of colored packets reported by the egress node. A quantity that is of lost packets PacketLoss[i] of the target service flow within an $i^{th}$ detection period and that is obtained by the controller 02 through calculation may be:

$$PacketLoss[i]=Tx[i]–Rx[i].$$

Tx[i] is a quantity, reported by the ingress node, of colored packets sent within the $i^{th}$ detection period, and Rx[i] is a quantity, reported by the egress node, of colored packets received within the $i^{th}$ detection period.

For example, as shown in FIG. 1, it is assumed that a target service flow includes three service sub-flows. An ingress node of a first service sub-flow is an NE 1, and an egress node of the first service sub-flow is an NE 2. An ingress node of a second service sub-flow is the NE 2, and an egress node of the second service sub-flow is an NE 3. An ingress node of a third service sub-flow is the NE 3, and an egress node of the third service sub-flow is the NE 1. In other words, the target service flow in the network has three ingress nodes: the NE 1, the NE 2, and the NE 3, and three egress nodes: the NE 1, the NE 2, and the NE 3. Unicast transmission of each service sub-flow is used as an example. A quantity of lost packets of the target service flow in an $i^{th}$ detection period may satisfy:

$$PacketLoss[i]=(T_{NE1}[i]+T_{NE2}[i]+T_{NE3}[i])–(R_{NE1}[i]+R_{NE2}[i]+R_{NE3}[i]).$$

$T_{NE1}[i]$, $T_{NE2}[i]$, and $T_{NE3}[i]$ are respectively quantities, reported by the NE 1, the NE 2, and the NE 3, of colored packets sent within the $i^{th}$ detection period. $R_{NE1}[i]$, $R_{NE2}[i]$, and $R_{NE3}[i]$ are respectively quantities, reported by the NE 1, the NE 2, and the NE 3, of colored packets received within the $i^{th}$ detection period.

When the IFIT technology is used for delay detection, each ingress node may color a service packet of the target service flow within each detection period, record an ingress timestamp of the colored packet, and report the ingress timestamp to the controller 02. Each egress node may record, based on a same detection period as that of the ingress node, an egress timestamp of the colored packet of the target service flow within each detection period, and report the egress timestamp to the controller 02. The controller 02 may further calculate a one-way delay of the target service flow based on the ingress timestamp reported by the ingress node and the egress timestamp reported by the egress node.

It should be understood that each node 01 has an ingress port and an egress port. Each node 01 may receive a service packet through the ingress port of the node 01, and forward the service packet to another node through the egress port of the node 01. Therefore, an ingress timestamp is a timestamp used when an ingress node receives a service packet through an ingress port of the ingress node, and an egress timestamp is a timestamp used when an egress node sends a service packet through an egress port.

For example, with reference to FIG. 1, it is assumed that within the $i^{th}$ detection period, an ingress timestamp reported by the NE 1 serving as an ingress node is T1, and an egress timestamp reported by the NE 2 serving as an egress node is T2. In addition, an ingress timestamp reported by the NE 2 serving as an ingress node is T3, and an egress timestamp reported by the NE 3 serving as an egress node is T4. In this case, the controller 02 may obtain, through calculation, a one-way delay from the NE 1 to the NE 2 within the $i^{th}$ detection period: $Delay_{12}[i]=T2-T1$, and a one-way delay from the NE 2 to the NE 3 within the $i^{th}$ detection period: $Delay_{23}[i]=T4-T3$.

It can be learned from the foregoing analysis that in the IFIT technology, performance indicators such as the packet loss and the delay need to be measured based on the detection period. To ensure that detection periods of different nodes 01 are synchronized, a time synchronization policy needs to be deployed on each node 01.

When the IFIT technology is used to perform in-situ flow detection (which may also be referred to as packet detection), IFIT information needs to be encapsulated in a service packet of a target service flow, and a node that receives the service packet may perform in-situ flow detection based on the IFIT information. In a network based on an MPLS technology or a segment routing (segment routing, SR) technology, as shown in FIG. 2, IFIT information is usually encapsulated between a stack bottom of an MPLS label stack and an MPLS payload (payload). It can be learned from FIG. 2 that a destination address (destination address, DA) and a source address (source address, SA) of the target service flow may also be encapsulated before the MPLS label stack in a packet. Alternatively, the IFIT information may be carried between a VRF label of the packet and a packet payload.

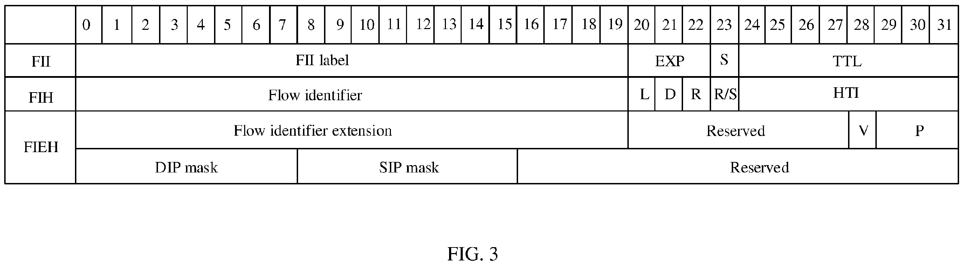

FIG. 3 is a schematic diagram of an IFIT information encapsulation format according to an embodiment of this application. As shown in FIG. 2 and FIG. 3, the IFIT information may include a flow instruction indicator (flow instruction indicator, FII) field, a flow instruction header (flow instruction header, FIH) field, and an FIEH field. Both a length of the FII field and a length of the FIH field may be 32 bits (bits), that is, 4 bytes; and a length of the FIEH field may be 64 bits, that is, 8 bytes. That is, a total length of the IFIT information may be 16 bytes. Definitions of the FII, the FIH, and the FIEH fields are as follows:

(1) The FII field includes an FII label (label) field. A value of the FII label field is configurable, a value range of the FII label field is 0 to 15, and a default value is 0xC. 0x is a hexadecimal number, and 0xC is a decimal number: 12. To ensure forward compatibility, a format of the FII field may comply with a specification of the request for comments (request for comments, RFC) 3032. It can be learned with reference to FIG. 3 that the FII field may further include: an experimental (experimental, EXP) field used to indicate a priority of the IFIT information, a stack bottom flag S field used to indicate that the IFIT information is encapsulated at the stack bottom, and a time to live (time to live, TTL) field.

(2) The FIH field may be used to carry basic information about in-situ flow detection performed based on the IFIT technology. As shown in FIG. 3, the FIH field may include the following information.

Flow identifier (flow ID) field: A length of this field is 20 bits (bits), and the field is used to carry a flow ID that can uniquely identify a service flow. A node that receives a service packet may identify a service flow based on the flow ID.

Loss flag (loss flag, L) field: A length of this field is 1 bit, and a value of the field is 0 or 1, where 1 indicates that a packet detection type is packet loss detection, and 0 indicates that packet loss detection does not need to be performed.

Delay flag (delay flag, D) field: A length of this field is 1 bit, and a value of the field is 0 or 1, where 1 indicates that a packet detection type is delay detection, and 0 indicates that delay detection does not need to be performed.

Reserved (reserved, R) field: A length of this field is 1 bit, and the field is reserved.

Stack bottom flag (R/S) field: A length of this field is 1 bit. If the FII label is at the stack bottom, the stack bottom flag field may be represented as R, and a value of the stack bottom flag field is set to 1 by default. If the FII label is not at the stack bottom, the stack bottom flag field may be represented as S, and a value of the stack bottom flag field is 0.

HTI field: A length of this field is 8 bits and a value of the field ranges from 0x00 to 0xFF. The field is used to indicate an in-situ flow detection manner and indicate whether the FIEH field is carried. Meanings of different values of the HTI field are as follows:

0x00: is reserved;
0x01: indicates basic end-to-end detection and indicates that an FIEH is not carried;
0x02: indicates basic hop-by-hop detection and indicates that an FIEH is not carried;
0x03: indicates extended end-to-end detection and indicates that an FIEH is carried, that is, the FIEH is valid;
0x04: indicates extended hop-by-hop detection and indicates that an FIEH is carried, that is, the FIEH is valid; and
0x05 to 0xFF: is reserved.

(3) The FIEH field may carry information used to support an IFIT technology extension capability. With reference to FIG. 3, the FIEH field mainly includes the following information.

Flow identifier extension (flow ID Ext) field: A length of this field is 20 bits, and the field is used to carry an extended flow ID, to increase a length of the flow ID. Information carried in the flow identifier extension field and information carried in the flow ID field in the FIH field may form a 40-bit unique flow identifier. The flow identifier extension field may enhance a flow identifier allocation manner.

Reverse flag (reverse Flag, V) field: A length of this field is 1 bit, and the field is used to indicate whether a reverse flow automatic learning function is enabled. When V=1, it indicates that the reverse flow automatic learning function is enabled. When V=0, it indicates that the reverse flow automatic learning function is disabled.

Detection period (period, P) field: A length of this field is 3 bits, and a value of the field ranges from 0 to 7. A value 1 indicates that a detection period is 1 second (s), a value 2 indicates that a detection period is 10s, a value 3 indicates that a detection period is 30s, a value 4 indicates that a detection period is 1 minute (min), and a value 5 indicates that a detection period is 5 min. Values 0, 6, and 7 are reserved.

Destination IP (destination IP, DIP) mask (mask) field: A length of this field is 8 bits, and the field is used to indicate a mask length of a destination IP address.

Source IP (source IP, SIP) mask field: A length of this field is 8 bits, and the field is used to indicate a mask length of a source IP address.

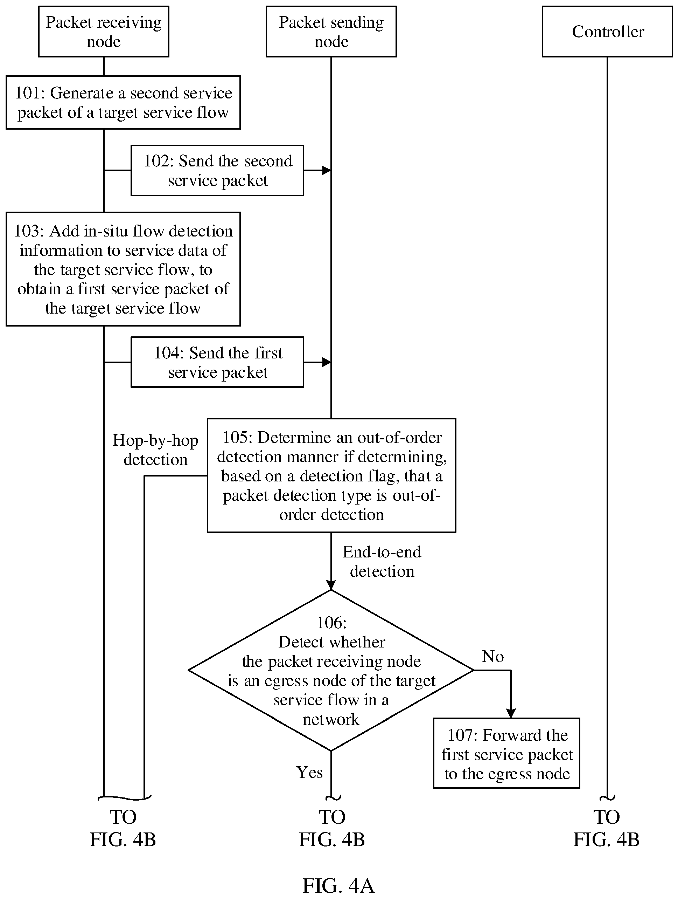

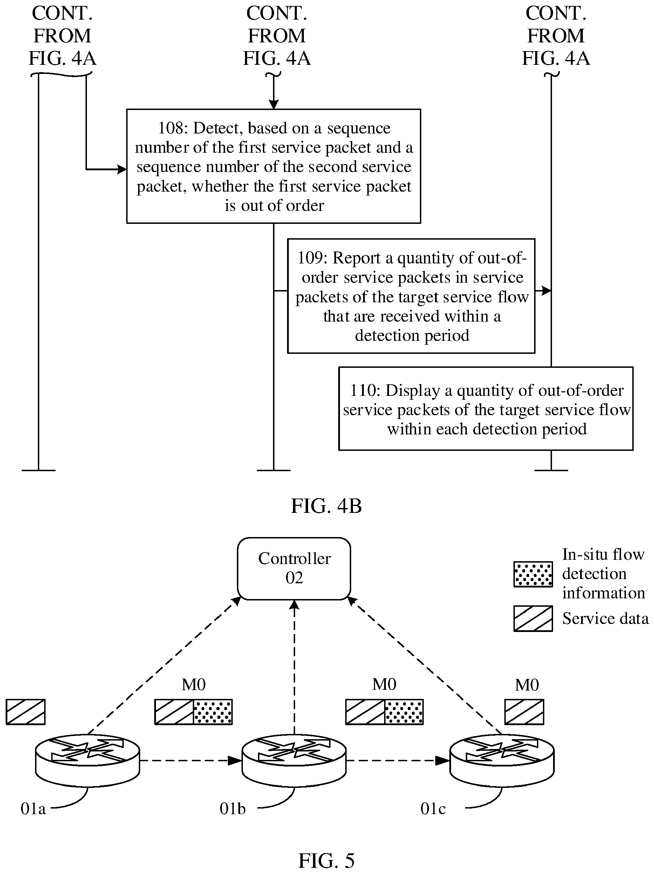

An embodiment of this application provides a packet out-of-order detection method, and the method may be applied to the foregoing data communication system, for example, may be applied to the system shown in FIG. 1. With reference to FIG. 4A and FIG. 4B, the method includes the following steps.

Step 101: A packet sending node generates a second service packet of a target service flow.

The packet sending node may encapsulate service data of the target service flow to obtain the second service packet, and the second service packet further includes a sequence number of the second service packet.

Step 102: The packet sending node sends the second service packet to a packet receiving node.

The packet sending node may query a routing table to determine a next-hop node (that is, the packet receiving node) of the second service packet, and then may send the second service packet to the packet receiving node.

Step 103: The packet sending node adds in-situ flow detection information to the service data of the target service flow, to obtain a first service packet of the target service flow.

In this embodiment of this application, in response to in-situ flow detection instructions for the target service flow, the packet sending node may add the in-situ flow detection information to the service data of the target service flow, to generate the first service packet of the target service flow. The in-situ flow detection instructions for the target service flow may be delivered by a controller, or may be manually configured by a worker on the packet sending node. Optionally, for a to-be-detected target service flow, when generating each service packet of the target service flow, the packet sending node may encapsulate the in-situ flow detection information into the service packet. For example, the second service packet generated in step 101 may also include the in-situ flow detection information.

The in-situ flow detection information may include a detection flag and a sequence number of the first service packet. The detection flag may be used to indicate that a packet detection type is out-of-order detection. The sequence number may be a character string that is allocated by the packet sending node and that is used to indicate a sending order of the first service packet. For example, sequence numbers allocated by the packet sending node may increase successively in a sending sequence of service packets of the target service flow. That is, for two service packets that are sent successively, a sequence number of a service packet that is sent later may be greater than a sequence number of a service packet that is sent earlier.

For example, as shown in FIG. 5, assuming that a packet sending node is a node 01a, a first service packet M0 generated by the packet sending node 01a includes service data and in-situ flow detection information.

Optionally, the in-situ flow detection information may be IFIT information. It can be learned with reference to FIG. 2 and FIG. 3 that the IFIT information may include an HTI field and an FIEH field.

In an optional implementation, the HTI field may carry the detection flag, and the FIEH field may carry the sequence number.

Currently, meanings of values 0x01 to 0x04 of the HTI field are defined. Therefore, one or more target values may be selected from a reserved value 0x00 and reserved values 0x05 to 0xFF as the detection flag.

For example, the target value 0x05 may be selected as the detection flag. In other words, when a value of the HTI field is 0x05, it may indicate that the packet detection type is the out-of-order detection. When a value of the HTI field is another value other than 0x05, it may indicate that a node receiving the first service packet does not need to perform out-of-order detection.

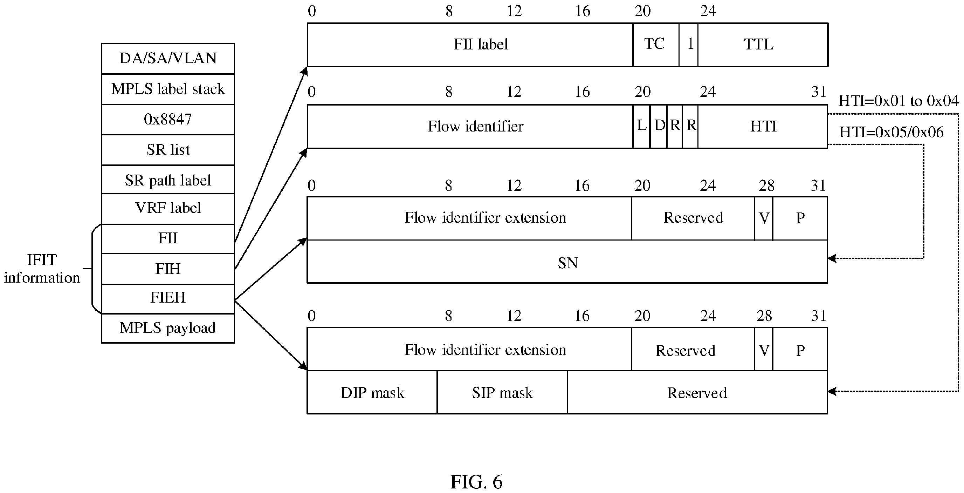

As shown in FIG. 6, in this embodiment of this application, definitions of the flow identifier extension field, the V field, the P field, and a reserved field between the flow identifier extension field and the V field in the FIEH field may remain unchanged, and the DIP mask field, the SIP mask field, and a remaining reserved field after the SIP mask field may be used to carry the sequence number of the first service packet. That is, the last 32 bits in the FIEH field may be used as a sequence number (sequence number, SN) field, to carry the sequence number of the service packet of the target service flow.

Optionally, in this implementation, the detection flag may be further used to indicate an out-of-order detection manner, and the out-of-order detection manner may include end-to-end detection or hop-by-hop detection. The end-to-end detection means that out-of-order detection is performed only on an egress node (or an ingress node and an egress node) of the target service flow. The hop-by-hop detection means that out-of-order detection is performed on each node (including an ingress node, an egress node, and a transit node) through which the target service flow passes.

In a scenario in which the detection flag may be further used to indicate the out-of-order detection manner, two different target values may be selected from the reserved value 0x00 and reserved values 0x05 to 0xFF of the HTI field, to separately indicate an out-of-order detection manner. For example, a value definition of the HTI field may be extended as follows:

0x05: indicates end-to-end out-of-order detection and indicates that an FIEH is carried, that is, the FIEH is valid; and
0x06: indicates hop-by-hop out-of-order detection and indicates that an FIEH is carried, that is, the FIEH is valid.

In this embodiment of this application, when the HTI field carries no detection flag, for example, in FIG. 6, when a value of the HTI field ranges from 0x01 to 0x04, a format of the FIEH field may be the same as an original format, that is, the last 32 bits are successively the DIP mask field, the SIP mask field, and the reserved field. When the HTI field carries a detection flag, for example, in FIG. 6, when a value of the HTI field is 0x05 or 0x06, the last 32 bits in the FIEH field may be an SN field used to carry a sequence number.

In another optional implementation, the FIEH field may carry the detection flag and the sequence number.

In the FIEH field, there is a reserved field whose length is 8 bits between the flow identifier extension field and the V field. Therefore, the detection flag may be carried by using the reserved field.

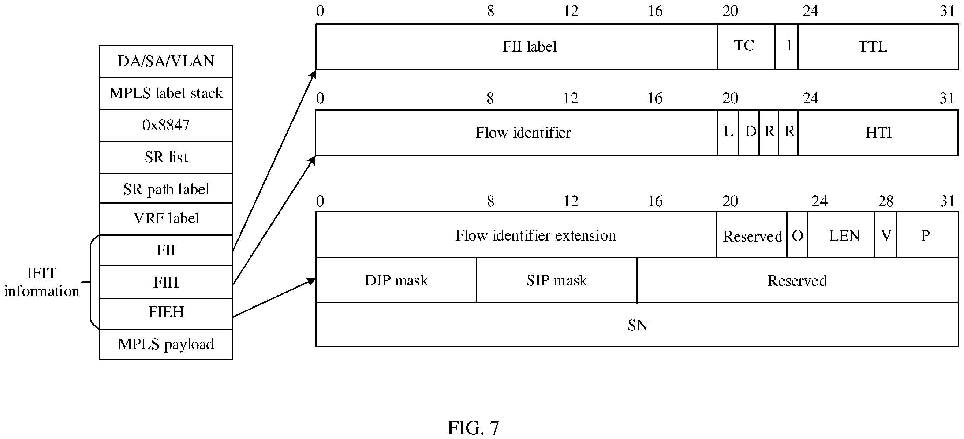

For example, with reference to FIG. 7, 1 bit in the reserved field after the flow identifier extension field in the FIEH field may be used as a detection flag field (that is, an O field in FIG. 7), to carry the detection flag. Alternatively, 1 bit in the reserved field after the SIP mask field may be used as the O field. For example, when a value of the O field is 1, it may indicate that the packet detection type is out-of-order detection.

For the sequence number, as shown in FIG. 7, several bytes (for example, four bytes) may be added to a length of the FIEH field, and the added bytes may be used as an SN field that is used to carry the sequence number. Because the length of the FIEH field is modified, several bits in a reserved field in the FIEH field may be further used as a LEN field, where the LEN field is used to carry the length of the FIEH field.

For example, with reference to FIG. 7, the last 4 bits of the reserved field between the flow identifier extension field and the V field may be used as the LEN field. Alternatively, 4 bits in the reserved field after the SIP mask field may be used as the LEN field. If a length of the newly added SN field is 4 bytes, a value of the LEN field may be 12, indicating that the length of the FIEH field is 12 bytes.

Optionally, in this implementation, alternatively, the length of the FIEH field may not need to be modified. Instead, as shown in FIG. 6, the last 32 bits in the FIEH field may be directly used as the SN field.

In this implementation, in-situ flow detection information may further include an indication flag used to indicate an out-of-order detection manner. Optionally, the indication flag may be carried in the HTI field.

On one hand, a value 0x03 of the HTI field may indicate extended end-to-end detection and indicate that the FIEH is carried; or a value 0x04 of the HTI field may indicate extended hop-by-hop detection and indicate that the FIEH is carried. Therefore, in this embodiment of this application, the two values may be reused as indication flags. That is, the value 0x03 of the HTI field may further indicate end-to-end out-of-order detection, and the value 0x04 of the HTI field may further indicate hop-by-hop out-of-order detection.

On the other hand, a value 0x00 and values 0x05 to 0xFF of the HTI field are reserved. Therefore, two different target values may be selected from the reserved value 0x00 and the values 0x05 to 0xFF to separately indicate an out-of-order detection manner. For example, the value 0x05 may indicate end-to-end out-of-order detection and indicate that the FIEH is carried, and a value 0x06 may indicate hop-by-hop out-of-order detection and indicate that the FIEH is carried.

Optionally, in this embodiment of this application, alternatively, the FIH field in the IFIT information may not need to include the L field and the D field.

Step 104: The packet sending node sends the first service packet to the packet receiving node.

The packet sending node may query a routing table to determine a next-hop node (that is, the packet receiving node) of the first service packet, and then may send the first service packet to the packet receiving node.

Step 105: The packet receiving node determines an out-of-order detection manner if determining, based on the detection flag, that the packet detection type is the out-of-order detection.

After receiving the first service packet, the packet receiving node may parse the first service packet to obtain the in-situ flow detection information. If the packet receiving node does not read the detection flag in the in-situ flow detection information, the packet receiving node may determine that the out-of-order detection does not need to be performed on the first service packet, and may continue to forward the first service packet, or may perform packet loss detection or delay detection based on an indication of the in-situ flow detection information.

If the packet receiving node reads the detection flag in the in-situ flow detection information, the packet receiving node may determine that the packet detection type is the out-of-order detection, and may further determine an out-of-order detection manner. For example, the packet receiving node may determine the out-of-order detection manner by using the detection flag or by using the indication flag carried in the in-situ flow detection information. If determining that the out-of-order detection manner is the hop-by-hop detection, the packet receiving node may determine that the out-of-order detection needs to be performed on the first service packet. Therefore, step 108 may be performed. If the out-of-order detection manner indicated by the detection flag is the end-to-end detection, the packet receiving node may perform step 106.

In an optional implementation, if the in-situ flow detection information is IFIT information, the HTI field in the IFIT information carries the detection flag, and the detection flag may further indicate an out-of-order detection manner, the packet receiving node may directly determine, by using a value of the HTI field, that the packet detection type is the out-of-order detection, and determine an out-of-order detection manner.

For example, if a value of the HTI field in the IFIT information is 0x05, that is, the detection flag is 0x05, the packet receiving node may determine that the packet detection type is the out-of-order detection, and the out-of-order detection manner is the end-to-end detection. Therefore, step 106 may continue to be performed. If a value of the HTI field in the IFIT information is 0x06, that is, the detection flag is 0x06, the packet receiving node may determine that the packet detection type is the out-of-order detection, and the out-of-order detection manner is the hop-by-hop detection. Therefore, step 108 may be directly performed.

In another optional implementation, if the FIEH field in the IFIT information carries the detection flag, and the HTI field carries the indication flag, the packet receiving node may determine, by using the detection flag of the FIEH field, that the packet detection type is the out-of-order detection, and may determine an out-of-order detection manner based on a value of the HTI field (that is, the indication flag).

For example, if a value of the O field in the FIEH field is 1, and a value of the HTI field is 0x03, the packet receiving node may determine that the packet detection type is the out-of-order detection, and the out-of-order detection manner is the end-to-end detection. Therefore, step 106 may continue to be performed. If a value of the O field is 1, and a value of the HTI field is 0x04, the packet receiving node may determine that the packet detection type is the out-of-order detection, and the out-of-order detection manner is the hop-by-hop detection. Therefore, step 108 may be directly performed. If a value of the O field is 0, and a value of the HTI field is 0x03, the packet receiving node may determine that the out-of-order detection does not need to be performed on the first service packet, and may perform end-to-end packet loss detection or delay detection based on the L field and the D field in the HTI field.

It can be learned from the foregoing analysis that, in the solution provided in this embodiment of this application, the out-of-order detection can be implemented in different manners based on configuration of the detection flag or the indication flag, to effectively improve flexibility of the out-of-order detection.

Step 106: The packet receiving node detects whether the packet receiving node is an egress node of the target service flow in a network.

In this embodiment of this application, if the packet receiving node determines that the out-of-order detection manner is the end-to-end detection, the packet receiving node may determine that only an ingress node and an egress node of the target service flow in the network need to perform the out-of-order detection on the first service packet. Therefore, the packet receiving node may continue to detect whether the packet receiving node is the egress node of the target service flow in the network.

If the packet receiving node is not the egress node, the packet receiving node may perform step 107. If the packet receiving node is the egress node, the packet receiving node may determine that the out-of-order detection needs to be performed on the first service packet, and therefore may perform step 108.

For example, as shown in FIG. 5, assume that an ingress node of the target service flow in the network is 01a, an egress node is 01c, and a transit node is 01b. If a packet receiving node that currently receives the first service packet is the transit node 01b, the transit node 01b may determine that the transit node 01b is not an egress node, and therefore may perform step 107. If a packet receiving node that currently receives the first service packet is the egress node 01c, the egress node 01c may determine that the egress node 01c is an egress node of the target service flow in the network, and therefore may perform step 108.

Optionally, in this embodiment of this application, the packet receiving node may determine, based on a forwarding procedure of the target service flow, whether the packet receiving node is the egress node of the target service flow in the network. For example, when detecting, based on an MPLS label stack in a service packet, that the service packet is leaving a tunnel, the packet receiving node may determine that the packet receiving node is the egress node of the target service flow in the network.

Step 107: The packet receiving node forwards the first service packet to the egress node.

If the packet receiving node is not the egress node, the packet receiving node may determine that the out-of-order detection does not need to be performed on the first service packet, and may continue to forward the first service packet to the egress node.

For example, with reference to FIG. 5, if the transit node 01b determines that the out-of-order detection manner is the end-to-end detection, the transit node 01b may forward the first service packet to the egress node 01c.

Step 108: The packet receiving node detects, based on the sequence number of the first service packet and the sequence number of the second service packet, whether the first service packet is out of order.

In this embodiment of this application, after determining that the out-of-order detection needs to be performed on the first service packet, the packet receiving node may obtain the sequence number of the first service packet and the sequence number of the second service packet. For example, for each service packet in the first service packet and the second service packet, the packet receiving node may obtain a sequence number of the service packet from the SN field in the FIEH field. The second service packet is a previous service packet that belongs to the target service flow and that is received by the packet receiving node before the first service packet is received. The previous service packet is a service packet that is received before the first service packet and whose receiving moment is closest to a receiving moment of the first service packet.

When determining the second service packet that belongs to the same target service flow as the first service packet, the packet receiving node may determine the second service packet based on flow IDs in in-situ flow detection information of the two service packets.

Optionally, in this embodiment of this application, the packet receiving node may determine, by comparing the sequence number of the first service packet with the sequence number of the second service packet, whether the service packets of the target service flow are out of order.

For example, if sequence numbers allocated by the packet sending node to the service packets of the target service flow increase successively in a service packet sending sequence, the packet receiving node may detect whether the sequence number of the first service packet is greater than the sequence number of the second service packet. If the sequence number of the first service packet is greater than the sequence number of the second service packet, it may be determined that the first service packet is not out of order. If the sequence number of the first service packet is less than the sequence number of the second service packet, it may be determined that the first service packet is out of order.

If sequence numbers allocated by the packet sending node to the service packets of the target service flow decrease successively in a service packet sending sequence, the packet receiving node may determine, when detecting whether the sequence number of the first service packet is less than the sequence number of the second service packet, that the first service packet is not out of order. The packet receiving node determines, when detecting that the sequence number of the first service packet is greater than the sequence number of the second service packet, that the first service packet is out of order.

Optionally, in this embodiment of this application, the packet receiving node may obtain the sequence number of the second service packet after determining that the out-of-order detection needs to be performed on the first service packet. Alternatively, the packet receiving node may obtain and store the sequence number of the second service packet in advance. For example, the packet receiving node may obtain the sequence number of the second service packet after receiving the second service packet.

Each node in the data communication system has an ingress port and an egress port, and each node may transmit a service packet received by an ingress port of the node to an egress port of the node. Therefore, in this embodiment of this application, the packet receiving node may perform the out-of-order detection on both a service packet received by an ingress port of the packet receiving node and a service packet sent by an egress port of the packet receiving node. Similarly, the packet sending node may also perform the out-of-order detection on a service packet sent by an egress port of the packet sending node. For a process in which each node performs the out-of-order detection on a service packet sent by an egress port of the node, refer to the foregoing step 105 to step 108. Details are not described herein again.

Step 109: Report, to the controller, a quantity of out-of-order service packets in the service packets of the target service flow that are received within a detection period.

In this embodiment of this application, the in-situ flow detection information encapsulated in the first service packet may further include a detection period. For example, with reference to FIG. 3, FIG. 6, and FIG. 7, the FIEH field in the IFIT information may include the P field, and the P field may carry a detection period. The packet receiving node may further periodically collect, based on the detection period indicated in the in-situ flow detection information, statistics on a quantity of out-of-order service packets of the target service flow within each detection period, and report the quantity to the controller.

Optionally, a forwarding plane of the packet receiving node may not distinguish between detection periods, and may continuously collect statistics on a quantity of out-of-order service packets of the target service flow, to obtain a total quantity of out-of-order service packets of the target service flow. A control plane of the packet receiving node may periodically read, based on the detection period, a total quantity of out-of-order service packets of the target service flow currently collected statistics on by the forwarding plane, and subtract a total quantity of out-of-order service packets of the target service flow read last time from the total quantity of out-of-order service packets of the target service flow currently collected statistics on, to obtain a quantity of out-of-order service packets of the target service flow within a current detection period.

If the packet receiving node separately performs the out-of-order detection on service packets of the ingress port and the egress port of the packet receiving node in step 105 to step 108, the packet receiving node may periodically report both a detection result of the ingress port and a detection result of the egress port to the controller. Similarly, if the packet sending node also performs the out-of-order detection on service packets of the egress port of the packet sending node, the packet sending node may also periodically report a quantity of out-of-order service packets within the detection period to the controller.

Step 110: The controller displays a quantity of out-of-order service packets of the target service flow within each detection period.

After receiving the quantity of out-of-order service packets that is reported by the packet receiving node, the controller may display the quantity of out-of-order service packets of the target service flow within each detection period. In other words, the controller may present out-of-order quality of the target service flow.

If the out-of-order detection manner is the end-to-end detection, the controller may present an out-of-order status of the target service flow on the egress node (or the egress node and the ingress node) based on a quantity of out-of-order service packets that is reported by the egress node (or the egress node and the ingress node).

If the out-of-order detection manner is the hop-by-hop detection, the controller may present an out-of-order status of the target service flow on each node based on quantities of out-of-order service packets that are reported by the egress node and the transit node (or the ingress node, the egress node, and the transit node). Based on the out-of-order status of the target service flow on each node, a specific node or link that causes out-of-order in a transmission path of the target service flow may be quickly determined, so that a fault source in the data communication system is quickly and accurately located.

Optionally, in this embodiment of this application, the packet sending node and the packet receiving node may also have a display function. That is, the packet sending node and the packet receiving node may also directly display the quantity of out-of-order service packets that is collected statistics on within each detection period.

A sequence of performing the steps in the packet out-of-order detection method provided in this embodiment of this application may be adjusted appropriately, or the steps may be correspondingly increased or decreased as required. For example, step 105 may be deleted as required. To be specific, when determining, based on the detection flag, that the packet detection type is the out-of-order detection, the packet receiving node may directly perform the out-of-order detection based on a preconfigured fixed detection manner. For example, it is assumed that the preconfigured out-of-order detection manner is the hop-by-hop detection. When determining, based on the detection flag, that the packet detection type is the out-of-order detection, each packet receiving node may directly perform step 108. In other words, the foregoing steps 106 and 107 may alternatively be deleted as required. Alternatively, the foregoing step 109 and step 110 may be deleted as required, that is, the packet receiving node may directly display a quantity of out-of-order service packets that is collected statistics on by the packet receiving node, and does not need to report the quantity to the controller. Any variation method readily figured out by a person skilled in the art within the technical scope disclosed in this application shall fall within the protection scope of this application. Therefore, details are not described.

In conclusion, this embodiment of this application provides the packet out-of-order detection method. The first service packet received by the packet receiving node includes the in-situ flow detection information, and the in-situ flow detection information includes the detection flag and the sequence number of the first service packet. When determining, based on the detection flag, that out-of-order detection needs to be performed on the first service packet, the packet receiving node may perform the out-of-order detection on the first service packet based on the sequence number of the first service packet and the sequence number of the previous service packet, that is, the second service packet. According to the method provided in this embodiment of this application, the out-of-order detection can be directly performed on the service packets of the target service flow. Therefore, the detection result can reflect an actual out-of-order status of the service packets of the target service flow, and a detection packet does not need to be constructed in a detection process. As a result, efficiency and accuracy of the out-of-order detection are effectively improved, and operation and maintenance costs of the data communication system can be effectively reduced.

In addition, because no detection packet needs to be constructed in the out-of-order detection process, the detection packet can be prevented from occupying link bandwidth and wasting bandwidth resources, to reduce a risk of a packet loss due to link congestion.

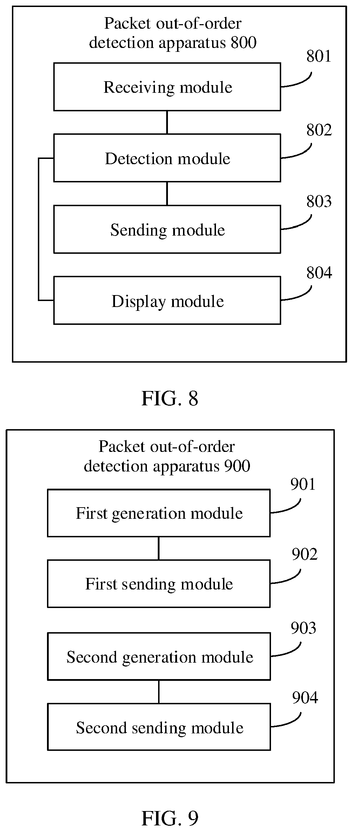

FIG. 8 is a schematic diagram of a structure of a packet out-of-order detection apparatus 800 according to an embodiment of this application. The apparatus 800 may be applied to a packet receiving node, and may implement a function of the packet receiving node in the embodiment shown in FIG. 4A and FIG. 4B. As shown in FIG. 8, the apparatus 800 may include:

a receiving module 801, configured to receive a first service packet of a target service flow, where the first service packet includes in-situ flow detection information, the in-situ flow detection information includes a detection flag and a sequence number of the first service packet, and the detection flag is used to indicate that a packet detection type is out-of-order detection; and

a detection module 802, configured to: when determining, based on the detection flag, that the packet receiving node needs to perform the out-of-order detection on the first service packet, detect, based on the sequence number of the first service packet and a sequence number of a second service packet, whether the first service packet is out of order, where the second service packet is a previous service packet that belongs to the target service flow and that is received by the packet receiving node before the first service packet is received. For implementation of a function of the detection module 802, refer to related descriptions of step 108 in the foregoing method embodiment.

Optionally, the in-situ flow detection information may be IFIT information. The IFIT information includes an HTI field and an FIEH field. The HTI field may carry the detection flag, and the FIEH field may carry the sequence number. Alternatively, the FIEH field may carry the detection flag and the sequence number.

Optionally, the detection flag may be further used to indicate an out-of-order detection manner. Alternatively, the in-situ flow detection information may further include an indication flag used to indicate an out-of-order detection manner. The out-of-order detection manner may include end-to-end detection or hop-by-hop detection. The detection module 802 may be configured to:

if determining, based on the detection flag, that the packet detection type is the out-of-order detection, and the out-of-order detection manner is the hop-by-hop detection, determine that the packet receiving node needs to perform the out-of-order detection on the first service packet; or if determining, based on the detection flag, that the packet detection type is the out-of-order detection, the out-of-order detection manner is the end-to-end detection, and the packet receiving node is an egress node of the target service flow in a network, determine that the packet receiving node needs to perform the out-of-order detection on the first service packet.

For implementation of a function of the detection module 802, refer to related descriptions of step 105 and step 106.

Optionally, sequence numbers of service packets in the target service flow increase successively in a service packet sending sequence, and the detection module 802 may be configured to:

if the sequence number of the first service packet is greater than the sequence number of the second service packet, determine that the first service packet is not out of order; or if the sequence number of the first service packet is less than the sequence number of the second service packet, determine that the first service packet is out of order.

Optionally, the in-situ flow detection information may further include a detection period. As shown in FIG. 8, the apparatus may further include:

a sending module 803, configured to report, to a controller, a quantity of out-of-order service packets in the service packets of the target service flow that are received within the detection period.

For implementation of a function of the sending module 803, refer to related descriptions of the foregoing step 109.

Alternatively, the apparatus may further include a display module 804, configured to display a quantity of out-of-order service packets in the service packets of the target service flow that are received within the detection period.

Certainly, the apparatus may include both the sending module 803 and the display module 804.

FIG. 9 is a schematic diagram of a structure of another packet out-of-order detection apparatus according to an embodiment of this application. The apparatus 900 may be applied to a packet sending node, and may implement a function of the packet sending node in the embodiment shown in FIG. 4A and FIG. 4B. As shown in FIG. 9, the apparatus 900 may include:

a first generation module 901, configured to generate a second service packet of a target service flow, where the second service packet includes a sequence number, and for implementation of a function of the first generation module 901, refer to related descriptions of step 101 in the foregoing method embodiment;

a first sending module 902, configured to send the second service packet to a packet receiving node, where for implementation of a function of the first sending module 902, refer to related descriptions of step 102 in the foregoing method embodiment;

a second generation module 903, configured to generate a first service packet of the target service flow, where the first service packet includes in-situ flow detection information, the in-situ flow detection information includes a detection flag and a sequence number of the first service packet, and the detection flag is used to indicate that a packet detection type is out-of-order detection, where for implementation of a function of the second generation module 903, refer to related descriptions of step 103 in the foregoing method embodiment; and

a second sending module 904, configured to send the first service packet to the packet receiving node.

The in-situ flow detection information is used to indicate the packet receiving node to perform, when the packet receiving node determines, based on the detection flag, that the out-of-order detection needs to be performed on the first service packet, the out-of-order detection based on the sequence number of the first service packet and a sequence number of the second service packet. For implementation of a function of the second sending module 904, refer to related descriptions of step 104 in the foregoing method embodiment.

Optionally, the second generation module 903 may be configured to add the in-situ flow detection information to service data of the target service flow, to obtain the first service packet of the target service flow.

The in-situ flow detection information is in-situ flow information telemetry IFIT information. The IFIT information includes a header type indicator HTI field and a flow instruction extension header FIEH field. The HTI field carries the detection flag, and the FIEH field carries the sequence number of the first service packet, or the FIEH field carries the detection flag and the sequence number of the first service packet.

Optionally, the first generation module 901 and the second generation module 903 may be a same module, and the first sending module 902 and the second sending module 904 may also be a same module.

It may be clearly understood by a person skilled in the art that, for the purpose of convenient and brief description, for a detailed working process of the foregoing packet out-of-order detection apparatus and each module, refer to a corresponding process in the foregoing method embodiment. Details are not described herein again.

It should be understood that the packet out-of-order detection apparatus provided in this embodiment of this application may alternatively be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof. Alternatively, the packet out-of-order detection method provided in the foregoing method embodiment may be implemented by using software. When the packet out-of-order detection method provided in the foregoing method embodiment is implemented by using software, modules in the packet out-of-order detection apparatus may alternatively be software modules.

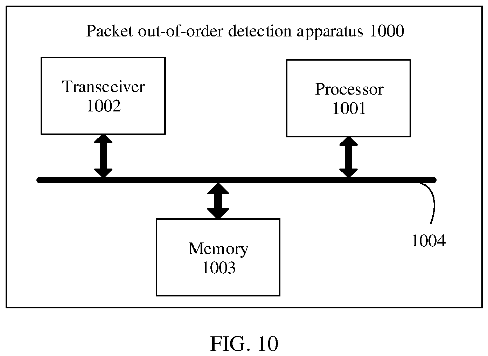

FIG. 10 is a schematic diagram of a structure of still another packet out-of-order detection apparatus according to an embodiment of this application. The apparatus 1000 may be applied to a packet sending node or a packet receiving node. With reference to FIG. 10, the apparatus 1000 may include a processor 1001, a memory 1002, a transceiver 1003, and a bus 1004. The bus 1004 is configured to connect the processor 1001, the memory 1002, and the transceiver 1003. A communication connection to another device may be implemented through the transceiver 1003 (which may be wired or wireless). The memory 1002 stores a computer program, and the computer program is used to implement various application functions.

It should be understood that in this embodiment of this application, the processor 1001 may be a CPU, or the processor 1001 may be another general-purpose processor, a digital signal processor (DSP), an application-specific integrated circuit (ASIC), a field-programmable gate array (FPGA), a GPU or another programmable logic device, a discrete gate or a transistor logic device, a discrete hardware component, or the like. The general-purpose processor may be a microprocessor, any conventional processor, or the like.

The memory 1002 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The bus 1004 may further include a power bus, a control bus, a status signal bus, and the like in addition to a data bus. However, for clear description, various types of buses in the figure are marked as the bus 1004.

The processor 1001 is configured to execute the computer program stored in the memory 1002. When the apparatus 1000 is applied to the packet sending node, the processor 1001 executes the computer program to implement steps performed by the packet sending node in the foregoing method embodiment. When the apparatus 1000 is applied to the packet receiving node, the processor 1001 executes the computer program to implement steps performed by the packet receiving node in the foregoing method embodiment.

An embodiment of this application further provides a computer-readable storage medium. The computer-readable storage medium stores instructions, and the instructions are executed by a processor to implement steps in the foregoing method embodiment.

An embodiment of this application further provides a computer program product that includes instructions. When the computer program product runs on a computer, the computer is enabled to perform steps in the foregoing method embodiment.

An embodiment of this application further provides a data communication system. With reference to FIG. 1 and FIG. 5, the data communication system may include a plurality of nodes 01. The plurality of nodes 01 includes a packet sending node and a packet receiving node. The packet receiving node may include an apparatus shown in FIG. 8 or FIG. 10, and the packet sending node may include an apparatus shown in FIG. 9 or FIG. 10.

Optionally, with reference to FIG. 1 and FIG. 5, the system may further include a controller 02. The controller 02 may receive and display an out-of-order detection result reported by each node 01.

Optionally, each node 01 in the data communication system may be used as a packet sending node to send a service packet, or may be used as a packet receiving node to receive a service packet. Therefore, each node 01 may have both a function of the packet sending node and a function of the packet receiving node in the embodiment shown in FIG. 4A and FIG. 4B.

All or some of the foregoing embodiments may be implemented by using software, hardware, firmware, or any combination thereof. When software is used to implement embodiments, the foregoing embodiments may be implemented all or partially in a form of a computer program product. The computer program product includes one or more computer instructions. When the computer program instructions are loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

It should be understood that "at least one" mentioned in this specification means one or more, and that "a plurality of" means at least two.

The foregoing descriptions are merely optional embodiments of this application, but are not intended to limit this application. Any equivalent modification, equivalent replacement, or improvement readily figured out by a person skilled in the art within the technical scope disclosed in this application shall fall within the protection scope of this application.

## Claims

1. A packet out-of-order detection method, applied to a packet receiving node, wherein the method comprises:

   receiving a first service packet of a target service flow, wherein the first service packet comprises in-situ flow detection information, the in-situ flow detection information comprises a detection flag and a sequence number of the first service packet, and the detection flag is used to indicate that a packet detection type is out-of-order detection; and
   when determining, based on the detection flag, that the packet receiving node needs to perform the out-of-order detection on the first service packet, detecting, based on the sequence number of the first service packet and a sequence number of a second service packet, whether the first service packet is out of order, wherein the second service packet is a previous service packet that belongs to the target service flow and that is received by the packet receiving node before the first service packet is received.

2. The method according to claim 1, wherein the in-situ flow detection information is in-situ flow information telemetry IFIT information, and the IFIT information comprises a header type indicator HTI field and a flow instruction extension header FIEH field; and
   the HTI field carries the detection flag, and the FIEH field carries the sequence number of the first service packet.

3. The method according to claim 1, wherein the in-situ flow detection information is in-situ flow information telemetry IFIT information, and the IFIT information comprises a flow instruction extension header FIEH field; and
   the FIEH field carries the detection flag and the sequence number of the first service packet.

4. The method according to any one of claims 1 to 3, wherein the detection flag is further used to indicate an out-of-order detection manner, or the in-situ flow detection information further comprises an indication flag used to indicate an out-of-order detection manner;

the out-of-order detection manner comprises: end-to-end detection or hop-by-hop detection; and
the determining, based on the detection flag, that the packet receiving node needs to perform the out-of-order detection on the first service packet comprises:

if determining, based on the detection flag, that the packet detection type is the out-of-order detection, and the out-of-order detection manner is the hop-by-hop detection, determining that the packet receiving node needs to perform the out-of-order detection on the first service packet; or
if determining, based on the detection flag, that the packet detection type is the out-of-order detection, the out-of-order detection manner is the end-to-end detection, and the packet receiving node is an egress node of the target service flow in a network, determining that the packet receiving node needs to perform the out-of-order detection on the first service packet.

5.   The method according to any one of claims 1 to 4, wherein sequence numbers of service packets of the target service flow increase successively in a service packet sending sequence, and the detecting, based on the sequence number of the first service packet and a sequence number of a second service packet, whether the first service packet is out of order comprises:

if the sequence number of the first service packet is greater than the sequence number of the second service packet, determining that the first service packet is not out of order; or
if the sequence number of the first service packet is less than the sequence number of the second service packet, determining that the first service packet is out of order.

6.   The method according to any one of claims 1 to 5, wherein the in-situ flow detection information further comprises a detection period, and after the detecting, based on the sequence number of the first service packet and a sequence number of a second service packet, whether the first service packet is out of order, the method further comprises:

reporting, to a controller, a quantity of out-of-order service packets in the service packets that are of the target service flow and that are received within the detection period; or
displaying a quantity of out-of-order service packets in the service packets that are of the target service flow and that are received within the detection period.

7.   A packet out-of-order detection method, applied to a packet sending node, wherein the method comprises:

generating a second service packet of a target service flow, wherein the second service packet comprises a sequence number;
sending the second service packet to a packet receiving node;
generating a first service packet of the target service flow, wherein the first service packet comprises in-situ flow detection information, the in-situ flow detection information comprises a detection flag and a sequence number of the first service packet, and the detection flag is used to indicate that a packet detection type is out-of-order detection; and
sending the first service packet to the packet receiving node, wherein
the in-situ flow detection information is used to indicate the packet receiving node to perform, when the packet receiving node determines, based on the detection flag, that the out-of-order detection needs to be performed on the first service packet, the out-of-order detection based on the sequence number of the first service packet and a sequence number of the second service packet.

8.   The method according to claim 7, wherein the generating a first service packet of the target service flow comprises:

adding the in-situ flow detection information to service data of the target service flow, to obtain the first service packet of the target service flow, wherein
the in-situ flow detection information is in-situ flow information telemetry IFIT information, the IFIT information comprises a header type indicator HTI field and a flow instruction extension header FIEH field, the HTI field carries the detection flag, and the FIEH field carries the sequence number of the first service packet, or the FIEH field carries the detection flag and the sequence number of the first service packet.

9.   A packet out-of-order detection apparatus, applied to a packet receiving node, wherein the apparatus comprises:

a receiving module, configured to receive a first service packet of a target service flow, wherein the first service packet comprises in-situ flow detection information, the in-situ flow detection information comprises a detection flag and a sequence number of the first service packet, and the detection flag is used to indicate that a packet detection type is out-of-order detection; and

a detection module, configured to: when determining, based on the detection flag, that the packet receiving node needs to perform the out-of-order detection on the first service packet, detect, based on the sequence number of the first service packet and a sequence number of a second service packet, whether the first service packet is out of order, wherein the second service packet is a previous service packet that belongs to the target service flow and that is received by the packet receiving node before the first service packet is received.

10. The apparatus according to claim 9, wherein the in-situ flow detection information is in-situ flow information telemetry IFIT information, and the IFIT information comprises a header type indicator field and a flow instruction extension header FIEH field; and
the HTI field carries the detection flag, and the FIEH field carries the sequence number of the first service packet.

11. The apparatus according to claim 9, wherein the in-situ flow detection information is in-situ flow information telemetry IFIT information, and the IFIT information comprises a flow instruction extension header FIEH field; and
the FIEH field carries the detection flag and the sequence number of the first service packet.

12. The apparatus according to any one of claims 9 to 11, wherein the detection flag is further used to indicate an out-of-order detection manner, or the in-situ flow detection information further comprises an indication flag used to indicate an out-of-order detection manner;

the out-of-order detection manner comprises: end-to-end detection or hop-by-hop detection; and
the detection module is configured to:

if determining, based on the detection flag, that the packet detection type is the out-of-order detection, and the out-of-order detection manner is the hop-by-hop detection, determine that the packet receiving node needs to perform the out-of-order detection on the first service packet; or
if determining, based on the detection flag, that the packet detection type is the out-of-order detection, the out-of-order detection manner is the end-to-end detection, and the packet receiving node is an egress node of the target service flow in a network, determine that the packet receiving node needs to perform the out-of-order detection on the first service packet.

13. The apparatus according to any one of claims 9 to 12, wherein sequence numbers of service packets of the target service flow increase successively in a service packet sending sequence, and the detection module is configured to:

if the sequence number of the first service packet is greater than the sequence number of the second service packet, determine that the first service packet is not out of order; or
if the sequence number of the first service packet is less than the sequence number of the second service packet, determine that the first service packet is out of order.

14. The apparatus according to any one of claims 9 to 13, wherein the in-situ flow detection information further comprises a detection period, and the apparatus further comprises:

a sending module, configured to report, to a controller, a quantity of out-of-order service packets in the service packets of the target service flow that are received within the detection period; or
a display module, configured to display a quantity of out-of-order service packets in the service packets of the target service flow that are received within the detection period.

15. A packet out-of-order detection apparatus, applied to a packet sending node, wherein the apparatus comprises:

a first generation module, configured to generate a second service packet of a target service flow, wherein the second service packet comprises a sequence number;
a first sending module, configured to send the second service packet to a packet receiving node;
a second generation module, configured to generate a first service packet of the target service flow, wherein the first service packet comprises in-situ flow detection information, the in-situ flow detection information comprises a detection flag and a sequence number of the first service packet, and the detection flag is used to

indicate that a packet detection type is out-of-order detection; and

a second sending module, configured to send the first service packet to the packet receiving node, wherein the in-situ flow detection information is used to indicate the packet receiving node to perform, when the packet receiving node determines, based on the detection flag, that the out-of-order detection needs to be performed on the first service packet, the out-of-order detection based on the sequence number of the first service packet and a sequence number of the second service packet.

16. The apparatus according to claim 15, wherein the second generation module is configured to:

add the in-situ flow detection information to service data of the target service flow, to obtain the first service packet of the target service flow, wherein

the in-situ flow detection information is in-situ flow information telemetry IFIT information, the IFIT information comprises a header type indicator HTI field and a flow instruction extension header FIEH field, the HTI field carries the detection flag, and the FIEH field carries the sequence number of the first service packet, or the FIEH field carries the detection flag and the sequence number of the first service packet.

17. A packet out-of-order detection apparatus, wherein the apparatus comprises a memory, a processor, and a computer program that is stored in the memory and that is executable on the processor, and when executing the computer program, the processor implements the packet out-of-order detection method according to any one of claims 1 to 6, or implement the packet out-of-order detection method according to claim 7 or 8.

18. A computer-readable storage medium, wherein the computer-readable storage medium stores instructions, and the instructions are executed by a processor to implement the packet out-of-order detection method according to any one of claims 1 to 6, or implement the packet out-of-order detection method according to claim 7 or 8.

19. A data communication system, comprising a packet receiving node and a packet sending node, wherein

the packet receiving node comprises the apparatus according to any one of claims 9 to 14; and

the packet sending node comprises the apparatus according to claim 15 or 16.

FIG. 1

| DA/SA |
| MPLS label stack |
| FII |
| FIH |
| FIEH |
| MPLS payload |

IFIT information

FIG. 2

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |
|---|---|---|---|---|---|---|---|---|---|---|----|----|----|----|----|----|----|----|----|----|----|----|----|----|----|----|----|----|----|----|----|----|
| FII | FII label | | | | | | | | | | | | | | | | | | | | EXP | | | S | TTL | | | | | | | |
| FIH | Flow identifier | | | | | | | | | | | | | | | | | | | | L | D | R | R/S | HTI | | | | | | | |
| FIEH | Flow identifier extension | | | | | | | | | | | | | | | | | | | | Reserved | | | | | | | | V | P | | |
| | DIP mask | | | | | | | | | | SIP mask | | | | | | | | | | Reserved | | | | | | | | | | | |

FIG. 3

| Packet receiving node | Packet sending node | Controller |
|---|---|---|

**101: Generate a second service packet of a target service flow**

**102: Send the second service packet**

**103: Add in-situ flow detection information to service data of the target service flow, to obtain a first service packet of the target service flow**

**104: Send the first service packet**

Hop-by-hop detection

**105: Determine an out-of-order detection manner if determining, based on a detection flag, that a packet detection type is out-of-order detection**

End-to-end detection

**106: Detect whether the packet receiving node is an egress node of the target service flow in a network**

No

**107: Forward the first service packet to the egress node**

Yes

TO
FIG. 4B

TO
FIG. 4B

TO
FIG. 4B

FIG. 4A

CONT.
FROM
FIG. 4A

CONT.
FROM
FIG. 4A

CONT.
FROM
FIG. 4A

108: Detect, based on a sequence number of the first service packet and a sequence number of the second service packet, whether the first service packet is out of order

109: Report a quantity of out-of-order service packets in service packets of the target service flow that are received within a detection period

110: Display a quantity of out-of-order service packets of the target service flow within each detection period

FIG. 4B

Controller 02

In-situ flow detection information

Service data

M0

M0

M0

01a

01b

01c

FIG. 5

| DA/SA/VLAN |
| MPLS label stack |
| 0x8847 |
| SR list |
| SR path label |
| VRF label |
| FII |
| FIH |
| FIEH |
| MPLS payload |

IFIT information

| 0 | 8 | 12 | 16 | 20 | 24 | |
|---|---|---|---|---|---|---|
| FII label | | | | TC | 1 | TTL |

| 0 | 8 | 12 | 16 | 20 | 24 | 31 |
|---|---|---|---|---|---|---|
| Flow identifier | | | | L D R R | HTI | |

HTI=0x01 to 0x04

HTI=0x05/0x06

| 0 | 8 | 12 | 16 | 20 | 24 | 28 | 31 |
|---|---|---|---|---|---|---|---|
| Flow identifier extension | | | | Reserved | | V | P |
| SN | | | | | | | |

| 0 | 8 | 12 | 16 | 20 | 24 | 28 | 31 |
|---|---|---|---|---|---|---|---|
| Flow identifier extension | | | | Reserved | | V | P |
| DIP mask | SIP mask | Reserved | | | | | |

FIG. 6

| | DA/SA/VLAN |
|---|---|
| | MPLS label stack |
| | 0x8847 |
| | SR list |
| | SR path label |
| | VRF label |
| IFIT information | FII |
| | FIH |
| | FIEH |
| | MPLS payload |

| 0 | | 8 | 12 | 16 | 20 | | 24 | | 31 |
|---|---|---|---|---|---|---|---|---|---|
| FII label | | | | | TC | 1 | TTL | | |

| 0 | | 8 | 12 | 16 | 20 | | | 24 | | 31 |
|---|---|---|---|---|---|---|---|---|---|---|
| Flow identifier | | | | | L | D | R | R | HTI | |

| 0 | | 8 | 12 | 16 | 20 | | 24 | | 28 | | 31 |
|---|---|---|---|---|---|---|---|---|---|---|---|
| Flow identifier extension | | | | | Reserved | O | LEN | | V | P | |
| DIP mask | | SIP mask | | | Reserved | | | | | | |
| SN | | | | | | | | | | | |

FIG. 7

Packet out-of-order
detection apparatus 800

Receiving module — 801

Detection module — 802

Sending module — 803

Display module — 804

FIG. 8

Packet out-of-order
detection apparatus 900

First generation module — 901

First sending module — 902

Second generation module — 903

Second sending module — 904

FIG. 9

Packet out-of-order detection apparatus 1000

Transceiver
1002

Processor
1001

Memory
1003

1004

FIG. 10

## INTERNATIONAL SEARCH REPORT

| International application No. |
|---|
| **PCT/CN2020/118156** |

**A. CLASSIFICATION OF SUBJECT MATTER**

H04L 12/26(2006.01)i; H04L 12/801(2013.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; CNKI; USTXT; EPTXT; WOTXT: 错序, 乱序, 随流, 检测, 同一, 流, 序列号, 序号, 编号, 顺序, 带内流信息测量, 遥测, disorder, out of order, detect, same, flow, stream, sequence number, SN, order, IFIT, in-situ flow information telemetry

**C. DOCUMENTS CONSIDERED TO BE RELEVANT**

| Category* | Citation of document, with indication, where appropriate, of the relevant passages | Relevant to claim No. |
|---|---|---|
| PX | CN 110943933 A (HUAWEI TECHNOLOGIES CO., LTD.) 31 March 2020 (2020-03-31) description paragraphs [0108]-[0189] | 1-19 |
| X | CN 108243211 A (HUAWEI TECHNOLOGIES CO., LTD.) 03 July 2018 (2018-07-03) description, paragraphs [0043]-[0133] | 1-19 |
| X | CN 107454276 A (ZTE CORPORATION) 08 December 2017 (2017-12-08) description, paragraphs [0023]-[0078] | 1-19 |
| X | CN 103997426 A (ZTE CORPORATION) 20 August 2014 (2014-08-20) description paragraphs [0038]-[0102] | 1-19 |
| A | CN 106375158 A (HUAWEI TECHNOLOGIES CO., LTD.) 01 February 2017 (2017-02-01) entire document | 1-19 |
| A | CN 110572293 A (HUAWEI TECHNOLOGIES CO., LTD.) 13 December 2019 (2019-12-13) entire document | 1-19 |
| A | US 2016099853 A1 (CISCO TECH. INC.) 07 April 2016 (2016-04-07) entire document | 1-19 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 October 2020** | **25 November 2020** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/118156**

| Patent document<br>cited in search report | | | Publication date<br>(day/month/year) | Patent family member(s) | | | Publication date<br>(day/month/year) |
|---|---|---|---|---|---|---|---|
| CN | 110943933 | A | 31 March 2020 | WO | 2020063339 | A1 | 02 April 2020 |
| CN | 108243211 | A | 03 July 2018 | EP | 3544261 | A1 | 25 September 2019 |
| | | | | US | 2019312938 | A1 | 10 October 2019 |
| | | | | EP | 3544261 | A4 | 08 April 2020 |
| | | | | WO | 2018113373 | A1 | 28 June 2018 |
| CN | 107454276 | A | 08 December 2017 | WO | 2017206763 | A1 | 07 December 2017 |
| CN | 103997426 | A | 20 August 2014 | EP | 2958251 | A4 | 26 October 2016 |
| | | | | WO | 2014124589 | A1 | 21 August 2014 |
| | | | | EP | 2958251 | A1 | 23 December 2015 |
| | | | | US | 2016006636 | A1 | 07 January 2016 |
| | | | | CN | 103997426 | B | 16 November 2018 |
| | | | | EP | 2958251 | B1 | 19 June 2019 |
| | | | | US | 9571375 | B2 | 14 February 2017 |
| CN | 106375158 | A | 01 February 2017 | CN | 106375158 | B | 13 September 2019 |
| CN | 110572293 | A | 13 December 2019 | WO | 2019233179 | A1 | 12 December 2019 |
| US | 2016099853 | A1 | 07 April 2016 | None | | | |

Form PCT/ISA/210 (patent family annex) (January 2015)

**EP 4 096 165 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010127992X